# EUROPÄISCHE PATENTSCHRIFT

(11) **EP 2 329 483 B1**
(45) Veröffentlichungstag und Bekanntmachung des Hinweises auf die Patenterteilung: **13.04.2016**
(21) Anmeldenummer: 09736396.4
(22) Anmeldetag: 30.09.2009
(51) Int. Cl.: G09F 9/00, G09F 21/04, B60Q 1/26, B60Q 1/50

(54) **PROGRAMMIERBARE ANZEIGETAFEL, INSBESONDERE FOLIE, ZUR ANBRINGUNG AN EINEM FAHRZEUG**
PROGRAMMABLE DISPLAY BOARD, IN PARTICULAR FILM, FOR APPLICATION ONTO A VEHICLE
TABLEAU D'AFFICHAGE PROGRAMMABLE, EN PARTICULIER FEUILLE, POUR MISE EN PLACE DANS UN VÉHICULE

(30) Priorität: 30.09.2008 AT 15232008
(43) Veröffentlichungstag der Anmeldung: 08.06.2011
(73) Patentinhaber: Doskar, Martin, 1010 Wien (AT)
(72) Erfinder: Katschinka, Werner, 1180 Wien (AT)
(74) Vertreter: Müllner, Martin
(86) Internationale Anmeldenummer: PCT/EP2009/062665
(87) Internationale Veröffentlichungsnummer: WO 2010/037766

(56) Entgegenhaltungen:
- WO-A2-2008/019105
- DE-T2- 60 129 253
- FR-A1- 2 824 172
- FR-A1- 2 857 089
- US-B1- 6 300 870

## Beschreibung

### Technisches Gebiet

Die Erfindung betrifft eine programmierbare Anzeigetafel, insbesondere Folie, zur Anordnung im Heckbereich eines Fahrzeuges, mit einem Datenspeicher für Bild- und Textinformation und mit einer Schaltung zur Aktivierung und Steuerung der Anzeigetafel, mit einem Sensor zur Entfernungsmessung zu einem nachfolgenden Fahrzeug sowie vorzugsweise mit einem Anschluss der Schaltung an ein Geschwindigkeitsmessgerät. Ein Großteil der Fahrzeuge verfügt über Aufschriften und Werbeaufkleber. Jedes Firmenfahrzeug trägt die Firmenaufschrift, das Logo und Informationen zum Dienstleistungs- oder Vertriebsprogramm. Auch im privaten Bereich werden gerne Aufkleber verwendet, um eine Botschaft zu vermitteln, etwa über eine Ferienregion, die aufgesucht wurde oder über ein Geschäft, mit welchem man sehr gute Erfahrungen gemacht hat. Darüber hinaus gibt es Werbeaufkleber, die etwa ein Taxiunternehmen gegen Bezahlung auf seinen Fahrzeugen anbringt. Es werden also auch Fahrzeugflächen als Werbeträger für bereitgestellte Aufkleber vermietet.

### Stand der Technik

Aus der DE 10122977 A ist ein Werbe- und Informationsfahrzeug bekannt, das über eine LCD-Anzeigeeinrichtung an einer Außenseite verfügt. Auf der Anzeige können wechselnde statische und bzw. oder bewegte Bilder wiedergegeben werden. In einer besonderen Ausführungsform werden statische Bilder oder Werbebotschaften während der Fahrt und bewegte filmszenische Bilder bei abgestelltem Fahrzeug vermittelt.

Die WO 2008/019105 A betrifft ein solches Werbefahrzeug, das auch über drahtlose Übertragung Werbebotschaften empfängt und wiedergibt und das zusätzlich im Interesse der Verkehrssicherheit Werbung ausblendet und beim Bremsen oder Abbiegen entsprechende Warnhinweise für den fließenden Straßenverkehr anzeigt. Die Anordnung wird also einerseits fahrzeugunabhängig mit Werbung gespeist und anderseits werden Daten, die mit dem Lenken und Bremsen im Zusammenhang stehen, also von der Fahrzeugführung herrühren, zugeführt und mit Priorität angezeigt.

Aus der US 6178677 B ist ein Display im Heckfensterbereich eines Fahrzeuges bekannt, das vom Fahrer bei Bedarf eingeschaltet werden kann und das einen Warnhinweis "Bitte Abstand halten" wiedergibt.

Von besonderem Interesse ist ferner die FR 2857089 A. Um Auffahrunfälle zu vermeiden, wird der Abstand von einem zu sichernden Fahrzeug zu einem nachfolgenden Fahrzeug gemessen, sowie die Relativgeschwindigkeit zwischen den beiden Fahrzeugen ermittelt. Diese wird zur Warnung auf einem Display des zu sichernden Fahrzeuges nach hinten dem nachfolgenden Fahrzeug angezeigt, damit der Fahrer desselben rechtzeitig bremst, wenn der Abstand rasch abnimmt bzw. sich die Relativgeschwindigkeit der Fahrzeuge zueinander erhöht. Zu dem Zweck der Erfassung der Relativgeschwindigkeit sind Sensoren zur Entfernungsmessung sowie zur Geschwindigkeitsmessung vorgesehen.

Aus der WO 2008/044768 A ist im Rahmen eines Computerspieles ein Bildschirm und ein Datenspeicher für das Spiel sowie eine Vorrichtung zur Entfernungsmessung zwischen Bildschirm und dem Spieler vorgesehen. Die Buchstaben (Zeichen) und die Bilder auf dem Bildschirm werden je nach der Entfernung zum Spieler größer oder kleiner dargestellt. Damit kann der Spieler über seine Sitzposition vor dem Bildschirm auf die Wiedergabe Einfluss nehmen.

Die JP 10260666 A zeigt einen Laptop und offenbart eine Entfernungsmessung vom oberen Rand des Bildschirmes bis zur Bedienungsperson. Es werden von einer mittleren Normalentfernung ausgehend die Buchstaben und Bilder bei Unterschreiten dieser Normalentfernung verkleinert und bei Überschreiten der Normalentfernung vergrößert.

### Darstellung der Erfindung

Die Erfindung geht von dem Stand der Technik einer Geschwindigkeits- und Entfernungsmessung bei Fahrzeugen mit Display aus und hat sich zur Aufgabe gestellt, eine Werbebotschaft gezielt auf den Empfänger und in Abstimmung auf diesen, nämlich den oder die Insassen eines nachfolgenden Fahrzeuges, zu vermitteln. Dies wird mit einer programmierbaren Anzeigetafel gemäß der einleitenden Beschreibung dadurch erreicht, dass die Anzeigetafel unterhalb eines einstellbaren Abstandsschwellenwertes von beispielsweise 30 m und vorzugsweise unterhalb eines einstellbaren Geschwindigkeitsschwellenwertes von beispielsweise 30 km/h durch die Schaltung aktivierbar ist, dass der Datenspeicher über eine Tastatur oder über einen anschließbaren externen Datenträger oder über eine Funkverbindung von einer externen Zentrale mit Werbebotschaften programmierbar ist und dass in Abhängigkeit von dem Signal des Sensors zur Entfernungsmessung aus dem Datenspeicher die in Schrift- und Bildgröße den ermittelten unterschiedlichen Abständen zugeordneten oder abstandsabhängig im Erscheinungsbild vergrößerbaren und verkleinerbaren Daten zur Anzeige abrufbar sind.

Ein Entfernungssignal kann so zur Steuerung der Schaltung für die Wiedergabe der gespeicherten Werbeinhalte verwendet werden, dass die Anzeigetafel oder Anzeigefolie erst ab einer Entfernung von 30 m zu einem herankommenden bzw. nachfolgenden Fahrzeug eingeschaltet wird und dass sie unterhalb einer Entfernung von 10 m bei weiterer Annäherung eine vorerst großflächige und wenig detaillierte Werbung auf einer gleich bleibend großen Gesamtfläche der Anzeigetafel oder Folie mit zunehmend mehr Informationen, z.B. in kleinerer Schrift, wiedergibt. Ab z.B. 5 m Entfernung des nachfolgenden Fahrzeuges kann die Information als Text mit noch mehr Inhalt und mit noch etwas kleineren Buchstaben oder Zeichen, bezogen auf die zur Verfügung stehende Anzeigefläche, erfolgen. Als Display wird vorzugsweise ein Foliendisplay eingesetzt, das selbstklebend ist und das sich problemlos einer gekrümmten Fläche, wie etwa der Heckscheibe, anpasst.

Zusammenfassend wird also die Zeichengröße abstandsabhängig verändert, aber es werden auch je nach Abstand andere Werbebotschaften in einer jeweils gut erkennbaren Zeichengröße, z.B. in detaillierter Form im Nahbereich, vermittelt.

Dabei ist es zweckmäßig, wenn das Signal des Geschwindigkeitsmessgerätes als zusätzliche Steuergröße zur Selektion von Daten aus dem Datenspeicher der Schaltung zugeführt ist und wenn für höhere Geschwindigkeiten geringere Datenmengen zur Anzeige gespeichert sind. Die Anzeige wird erst aktiviert, wenn z.B. 30 km/h unterschritten sind. Bei langsamerer Fahrgeschwindigkeit werden zunehmend mehr Informationen auf gleicher Fläche vermittelt. Speziell im Stillstand des Fahrzeuges kann ohne Rücksicht auf Verkehrssicherheit ein Maximum an Informationstransfer erfolgen, wobei die Zeichengröße von dem ermittelten Abstand zum nachfolgenden Fahrzeug abhängt. Das Kriterium der Geschwindigkeit des mit der Anzeigetafel oder Folie ausgestatteten Fahrzeuges kann zusätzlich zum Kriterium des Abstandes zum nachfolgenden Fahrzeug bei der Auswahl und Vermittlung von Information nach Größe und Inhalt Eingang finden.

In diesem Sinn ist es zweckmäßig, wenn der Datenspeicher Bild- und Textinformation in unterschiedlichen Zeichengrößen, jeweils mit Zuordnung eines Abstandswertes, enthält und wenn die Daten in Abhängigkeit von dem an der Schaltung anliegenden Abstandswert zur Wiedergabe auf der Anzeigetafel abrufbar sind.

### Kurze Beschreibung der Zeichnungen

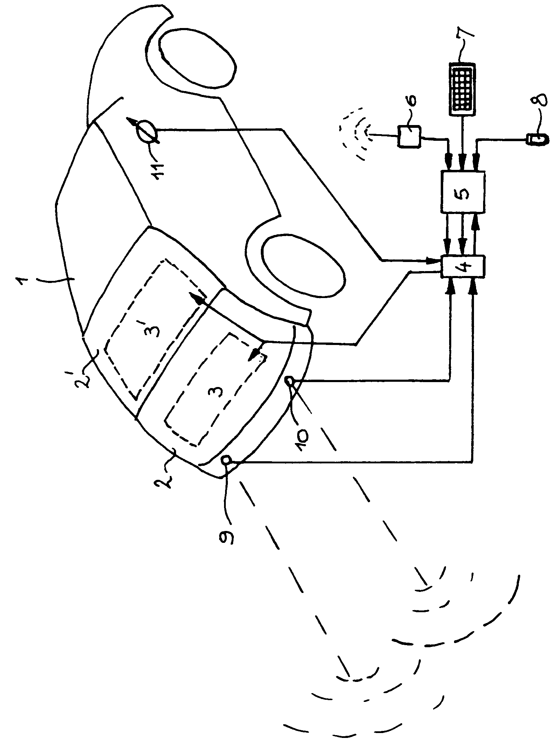

Ein Ausführungsbeispiel des Erfindungsgegenstandes ist in der Zeichnung dargestellt. Die Fig. zeigt schematisch ein Fahrzeug zusammen mit einem Blockschaltbild.

### Bester Weg zur Ausführung der Erfindung

Ein Fahrzeug 1 trägt an seinem Kofferraumdeckel 2 oder besser noch an der Heckscheibe 2', eine Anzeigetafel 3 oder im Falle der Heckscheibe 2 eine transparente Folie 3', die entsprechend einem LCD-Display ausgeführt sind und die mit einer Schaltung 4 sowie einem Datenspeicher 5 in Verbindung stehen. Der Datenspeicher 5 weist mehrere Eingänge auf - etwa für Daten, die von einem Empfänger 6 über ein drahtloses Netz (Handynetz) herangebracht werden, ferner eine Tastatur 7 zur Direkteingabe und einen Eingang für den Anschluss eines transportablen Datenspeichers 8 (Microstick). Die Schaltung 4 erhält im Ausführungsbeispiel Signale von zwei oder mehr Entfernungssensoren 9 und 10 und von einem Geschwindigkeitsmessgerät 11 (z.B. Tachometer). Auf Grund der Entfernung des nachfolgenden Fahrzeuges und allenfalls unter Berücksichtigung der eigenen Fahrgeschwindigkeit selektiert die Schaltung 4 Daten bzw. Informationen aus dem Datenspeicher 5 nach Inhalt und Zeichengröße bzw. stellt die Zeichengröße dem Abstand entsprechend lesbar ein. Das Ergebnis dieser Maßnahmen wird auf der Anzeigefolie 3' sichtbar gemacht.

So wird die Anzeige bzw. das System beispielsweise erst bei Annäherung des nachfolgenden Fahrzeuges auf weniger als 30 m eingeschaltet bzw. aktiviert. Ein großes, weithin sichtbares Logo erscheint. Ab einer ermittelten Entfernung von 15 m kommt eine Beschriftung hinzu. Noch mehr Textinformation (allenfalls auch Bildinformation) wird ab 8 m Entfernung vermittelt. Als zusätzliches Kriterium für die Aktivierung der Anzeige kann noch die Geschwindigkeit des Fahrzeuges mit der Anzeigetafel bzw. Folie eingeführt werden, sodass das gesamte System erst unterhalb einer Fahrgeschwindigkeit von 30 km/h überhaupt eingeschaltet wird. Ergänzend zum Abstandskriterium kann ferner bei höherer Geschwindigkeit weniger und bei geringerer Geschwindigkeit mehr Information vermittelt werden. Dem liegt der Gedanke zu Grunde, dass die sinnvolle und effiziente Informationsvermittlung beim Kolonnenfahren mit geringer Geschwindigkeit und sogar gelegentlichem Stillstand erfolgt.

Angemerkt sei noch, dass alle konkreten Geschwindigkeits- oder Entfernungsangaben beispielhaft gewählt wurden und jeweils mit anderen Werten den konkreten Bedürfnissen oder Erkenntnissen angepasst werden können.

## Patentansprüche

1. Programmierbare Anzeigetafel (3, 3'), insbesondere Folie, zur Anordnung im Heckbereich eines Fahrzeuges (1), mit einem Datenspeicher (5) für Bild- und Textinformation und mit einer Schaltung (4) zur Aktivierung und Steuerung der Anzeigetafel (3, 3'), mit einem Sensor (9, 10) zur Entfernungsmessung zu einem nachfolgenden Fahrzeug sowie vorzugsweise mit einem Anschluss der Schaltung (4) an ein Geschwindigkeitsmessgerät (11), **dadurch gekennzeichnet, dass** die Anzeigetafel (3, 3') unterhalb eines einstellbaren Abstandsschwellenwertes von beispielsweise 30 m und vorzugsweise unterhalb eines einstellbaren Geschwindigkeitsschwellenwertes von beispielsweise 30 km/h durch die Schaltung (4) aktivierbar ist, dass der Datenspeicher (5) über eine Tastatur (7) oder über einen anschließbaren externen Datenträger (8) oder über eine Funkverbindung (6) von einer externen Zentrale mit Werbebotschaften programmierbar ist und dass in Abhängigkeit von dem Signal des Sensors (9, 10) zur Entfernungsmessung aus dem Datenspeicher (5) die in Schrift- und Bildgröße den ermittelten unterschiedlichen Abständen zugeordneten oder abstandsabhängig im Erscheinungsbild vergrößerbaren und verkleinerbaren Daten zur Anzeige abrufbar sind.

2. Anzeigetafel (3, 3') nach Anspruch 1, **dadurch gekennzeichnet, dass** das Signal des Geschwindigkeitsmessgerätes (11) als zusätzliche Steuergröße zur Selektion von Daten aus dem Datenspeicher (5) der Schaltung (4) zugeführt ist und dass für höhere Geschwindigkeiten geringere Datenmengen zur Anzeige gespeichert sind.

3. Anzeigetafel (3, 3') nach Anspruch 1 oder 2, **dadurch gekennzeichnet, dass** der Datenspeicher (5) Bild- und Textinformation in unterschiedlichen Zeichengrößen, jeweils mit Zuordnung eines Abstandswertes, enthält und dass die Daten in Abhängigkeit von dem an der Schaltung (4) anliegenden Abstandswert zur Wiedergabe auf der Anzeigetafel (3, 3') abrufbar sind.

## Claims

1. A programmable display panel (3, 3'), in particular a film, for placement in the rear region of a vehicle (1), comprising a data storage device (5) for image information and text information and comprising a circuit (4) for activating and controlling the display panel (3, 3'), comprising a sensor (9, 10) for measuring the distance from a following vehicle and preferably comprising a connection from the circuit (4) to a speed measuring device (11), **characterized in that** the display panel (3, 3') is activatable by the circuit (4) below an adjustable distance threshold value of for example 30m and preferably below an adjustable speed threshold value of for example 30km/h, **in that** the data storage device (5) is programmable with advertising messages by way of a keypad (7) or by way of a connectable external data carrier (8) or by way of a wireless connection (6) from an external centre, and **in that** depending on the signal from the sensor (9, 10) for the distance measurement, the data for display can be retrieved from the data storage device (5), the data being adapted in script size and image size to the different vehicle spacings detected, or it being possible to make the data appear bigger or smaller depending on the spacing.

2. Display panel (3, 3') according to Claim 1, **characterized in that** the signal of the speed measuring device (11) is supplied to the circuit (4) as an additional control value for selection of data from the data storage device (5), and **in that** for higher speeds, smaller amounts of data are stored for display.

3. Display panel (3, 3') according to Claim 1 or 2, **characterized in that** the data storage device (5) holds image information and text information in different character sizes, in each case associated with a value of vehicle spacing, and **in that** the data can be retrieved depending on the spacing value present at the circuit (4), for reproduction on the display panel (3, 3').

## Revendications

1. Tableau d'affichage programmable (3, 3'), s'agissant notamment d'une feuille, lequel est destiné à être disposé à l'arrière d'un véhicule (1) et lequel est pourvu d'une mémoire de données (5) pouvant contenir des informations de type image ou texte et d'un circuit (4) permettant d'activer et de commander le tableau d'affichage (3, 3'), d'un capteur (9, 10) permettant de mesurer la distance par rapport à un véhicule suivant ainsi que, préférentiellement, d'une connexion reliant le circuit (4) à un dispositif de mesure de vitesse (11), **caractérisé en ce que** le tableau d'affichage (3, 3') peut être activé par le circuit (4) en-dessous d'un seuil de distance réglable qui est par exemple de 30 m et, de préférence, en-dessous d'un seuil de vitesse réglable qui est par exemple de 30 km/h, que la mémoire de données (5) peut être programmée, au moyen d'un clavier (7) ou au moyen d'un dispositif de stockage de données externe (8) pouvant s'y connecter ou au moyen d'une liaison radio (6) par un poste central externe de manière à afficher des messages publicitaires, et qu'en fonction du signal émanant du capteur (9, 10) pour mesurer la distance, on peut charger à partir de la mémoire de données (5) les données qui sont associées aux différentes distances mesurées en ce qui concerne la taille de l'écriture et des images ou qui peuvent être paraître sous une forme agrandie ou réduite selon la distance pour les afficher.

2. Tableau d'affichage (3, 3') selon la revendication 1, **caractérisé en ce qu**'on fait entrer le signal émanant du dispositif de mesure de vitesse (11) dans le circuit (4) pour qu'il y serve de grandeur de commande supplémentaire permettant de sélectionner des données à partir de la mémoire de données (5), et que la quantité de données qui sont stockées en vue de leur affichage, est moins importante pour les vitesses plus élevées.

3. Tableau d'affichage (3, 3') selon les revendications 1 ou 2, **caractérisé en ce que** la mémoire de données (5) contient des informations de type image ou texte en différentes tailles de caractère dont chacune est associée à une valeur de distance, et que les données peuvent être chargées, en fonction de la valeur de distance actuellement prise en compte par le circuit (4), en vue de leur reproduction sur le tableau d'affichage (3, 3').
